# EUROPEAN PATENT SPECIFICATION

(11) **EP 1 754 686 B1**
(45) Date of publication and mention of the grant of the patent: **07.08.2013**
(21) Application number: 04766957.7
(22) Date of filing: 23.09.2004
(51) Int. Cl.: C02F 3/00, C02F 3/34

(54) **BIOLOGICAL TREATMENT WHICH CAN BE USED FOR BACTERIAL BIOREMEDIATION IN AQUATIC ECOSYSTEMS AND OF URBAN AND INDUSTRIAL EFFLUENTS IN ORDER TO ENSURE ADEQUATE DIGESTION OF ORGANIC MATTER AND NUTRIENTS**
BIOLOGISCHE BEHANDLUNG, DIE ZUR BAKTERIELLEN BIOLOGISCHEN SCHADSTOFFENTFRACHTUNG IN AQUATISCHEN ÖKOSYSTEMEN UND STÄDTISCHEM UND INDUSTRIELLEM ABWASSER ZUR GEWÄHRLEISTUNG EINES ADÄQUATEN ABBAUS VON ORGANISCHEM MATERIAL UND NÄHRSTOFFEN VERWENDET WERDEN KANN
TRAITEMENT BIOLOGIQUE APPLICABLE A LA BIORESTAURATION BACTERIENNE DANS DES ECOSYSTEMES AQUATIQUES ET DES REJETS URBAINS ET INDUSTRIELS POUR LA DIGESTION ADEQUATE DE LA MATIERE ORGANIQUE ET DES NUTRIMENTS

(30) Priority: 03.05.2004 ES 200302241
(43) Date of publication of application: 21.02.2007
(73) Proprietor: Garcia Gonzalez, José, 46018 Valencia (ES)
(72) Inventor: Garcia Gonzalez, José, 46018 Valencia (ES)
(74) Representative: Pereira Toña, Maria Irache
(86) International application number: PCT/ES2004/000419
(87) International publication number: WO 2005/108309

(56) References cited:
- WO-A2-2004/009496
- ES-T3- 2 036 588
- US-A- 5 478 464
- US-A- 5 840 182
- US-A1- 2002 117 445
- US-B1- 6 402 941
- YU Z. ET AL.: 'Bioaugmentation with resin acid-degrading bacterium Zooloea resiniphila DhA-35 to counteractpH stress in an aerated lagoon treating pulp and paper mill effuent.' WATER RESEARCH vol. 36, no. 11, June 2002, pages 2793 - 2801, XP004361274

## Description

### PURPOSE OF THE INVENTION

This specification refers to a biological method applicable for the bacterial bioremediation in aquatic ecosystems and urban and industrial effluents for a proper digestion of organic matter and nutrients by means of the application of a biological product enhanced with 7 x 10⁹ cfu/gram or more, which is characterised for its non-toxicity both for human beings and the food chain of the environment, and which was tested (acute toxicity test) using bioindicators (algae, rotifers, tamnocephalus, daphnias) at very high doses (1000 mg/L), applicable for the treatment of urban, industrial, agrifood, livestock, and lixiviated effluents and aquatic sediments with high contents of organic compounds and nutrients; as well as to the suitable methodology for its application both in effluents and the natural environment. Such biological product and methodology are used for digesting and reducing organic matter and nutrients, by means of the methane way, that are found in effluents, in waters, or accumulated in pluvial sediments and water bodies polluted by non-purified effluents.

The lyophilised biological product is produced from a mixture of facultative anaerobic bacteria and aerobic bacteria cultures.

The amount in grams used from each bacterial culture for every 100 grams of the lyophilised product depends on each of the selected genus and is as follows: *5 grams of Bacillus, 3 grams of Bacteroides, 3 grams of Chaetomium, 10 grams of Clostridium*, *3 grams of Enterobacter, 3 grams of Enterococcus, 1 gram of Erwinia, 3 grams of Helicobacterium, 3 grams of Humicola, 3 grams of Klebsiella, 1 gram of Lactobacillus, 6 grams of Methanobacterium, 5 grams of Methanococcus, 5 grams of Methanosarcina, 5 grams of Methanospirillum, 5 grams of Nitrosolobus, 5 grams of Nitrosomonas, 5 grams of Nitrospira, 5 grams of Nitrobacter, 3 grams of Paracoccus, 3 grams of Pseudomonas, 3 grams of Ruminococcus, 3 grams of Sarcina, 3 grams of Streptomyces, 5 grams of Vibrio, 1 gram of Zymomonas,* selected from the natural media, revivable in more than 99 % when re-hydrating with water (inoculation), together with their specific and addressable enzymes, proteases, lipases, amylases, celullases, etc.

### SCOPE OF THE INVENTION

This invention can be applied within the industry devoted to the specific treatment and reduction of organic matter, organic and inorganic nutrients, and other polluting substances present in effluents such as urban, industrial, lixiviated, agrifood (olive oil mills wastewaters) and livestock (cattle slurry) effluents, or those accumulated in historic sediments and waters in aquatic ecosystems.

The invention can also be used for eliminating annoying smells, pathogen bacteria, and fly and mosquito larvae.

### BACKGROUND OF THE INVENTION

The following should be taken into account for the treatment of residual effluents and water preservation in aquatic ecosystems:
The nutritional requirements for BOD : nitrogen : phosphorous in anaerobic digestion are in a ratio of 700 : 5 : 1. Only manure is nutritionally balanced. Also, for an optimum growth of methanogens, the presence of four elements at very low concentrations is necessary:
   Fe 2 nM, Co 10 nM, Ni 100 nM, and Mo 10 nM.

For biological bioremediation treatments, the inoculum shall be enriched with molybdenum between 10-20 ppm as ammonium molybdate, because this element acts as a co-factor in certain metabolic reactions, and it is essential for the optimal development of methanogen bacteria and for specially solving the efficiency of the methodology applied.

### Other Patents

Invention Patent ES 2 059 799 presents a product and a procedure for activating the operation of an anaerobic digestive system of urban solid residues.

The invention refers to a product and a procedure used for activating an anaerobic digestion system.

The introduction of products whose purpose would be to activate its operation has been proposed, as is the case of Invention Patent files CA1.086.434, FR 2.338.227, FR 2.190.742, WO 8705592, JP 60 114 394, WO 8500355, DE 3.106.422, US 3.645.769, FR 1.268.165, FR 2.357.490, FR 2.599.356.

Invention Patent ES 2.093.556 presents a procedure for the integral purification of organic wastewaters through biological processes.

Invention Patent ES 2.088.368 presents an anaerobic digestion process, in two phases, of sludge coming from the purification of wastewaters with organic content.

In addition, patent WO 2004 009496 describes a wastewater treatment unit wherein the contents thereof are very low, of the order of 300 mg of BOD5 or lower. The method proposed is intended to treat sediments with high or very high organic contents, of the order of 5,000 mg of BOD5 and up to 50,000 or 100,000 mg of BOD5.

Patent US 2002 117 445 describes a fermentation system applied to the treatment of wastewater, which is a bacterial metabolic process carrying out the transformation of carbohydrates into alcohol for alcoholic fermentation for example.

### Characteristics of the inoculum:

The bacteria used were selected and isolated by means of selective cultures, nurtured in enriched culture media and trace elements and, thus, induced for the production of endo- and exo-enzymes capable of producing hydrolysis, acidogenesis, acetogenesis and methanogenesis on the organic matter and nutrients of the substrate over which they are applied, avoiding the generation of sulphide at the same time.

The characteristics of the inoculum are fundamental for the development and productivity of the treatment. In general, the balance between the acid production phase and the methane production phase is of vital importance. These phases are dependant on the qualitative and quantitative aspects of the micro-organisms present. The time of residence of methanogenic micro-organisms is the key parameter in this interrelation.

### DESCRIPTION OF THE INVENTION

The invention is a methodological procedure for a bacterial bioremediation treatment of urban and industrial effluents and water and sediments in aquatic ecosystems which requires:
- Firstly, a lyophilised biological product composed by anaerobic, facultative, and aerobic bacteria with a concentration of 7x10⁹ cfu/gram or greater, which, upon re-hydration, revive with a rate greater than 99% and which contain the necessary enzymes for their metabolic development.
- Second, a balanced biological nutrient and enhancer for the development of the micro-organisms.
- Third, the mineral substances (trace elements) essential for the optimal development of the chemical reactions in the metabolic processes.
- And fourth, a stringent process for the preparation of the mixture (inoculum) and for the application.

Once it has been prepared for use (inoculum) and applied on the substrates, the biological method applicable for bacterial bioremediation in aquatic ecosystems and urban and industrial effluents targeted by the invention acts on the pollutants, the organic matter and organic and inorganic nutrients present in the media, as well as other substances of variable toxicity, to achieve an efficient digestion by the methane way.

The mechanism of action is multiple: firstly, it is highly competitive due to its great affinity for the substrate, caused by bacterial and enzymatic directionality and specificity; secondly, it is optimised due to the high number of individuals inoculated by cubic centimetre and its proliferation speed; and thirdly, thanks to its physical chemistry action it is able to achieve the displacement of other undesirable micro-organisms by displacing the pH of the environment towards the 7.1-7.3 range when creating a great buffer effect.

The mode of action is such because the bacterial cell development for anaerobic digestion is carried out mainly through the methane way. When the presence of oxygen is enough, aerobic and facultative digestion also takes place.

The invention presents no toxicity whatsoever; it was assessed (acute toxicity test) by means of tests with bioindicators (algae, algae, rotifers, tamnocephalus, daphnias) at very high doses (1000 mg/L).

As regards diagnosis and dosage of bacterial bioremediation treatments, it should be noted that for each particular case and area to treat, a diagnosis and the determination of a specific quantitative dosage, which will vary according to the characteristics of the location, that is, substrate, sediment, sludge, etc., or thickness, depth and extension of the area to treat, shall be carried out.

The doses of the lyophilised product to apply vary between 40 grams per cubic metre and 80 grams per cubic metre of sludge, sediment, effluent, etc., to treat.

For an untimely preparation of the inoculum, it shall be done, for any application size, in the interior of a recipient or reactor, where the following are introduced strictly in this order: water of the water medium to treat, activating biological nutrient (hydrolysed protein with added trace elements) and then the biological product under asphyxia conditions in a proportion of 12.5 grams per litre in the volume of the reactor. These are mixed with sustained recirculation during 30 minutes at least, after which the inoculum will be ready for application.

The inoculum shall be applied from the reactor by means of a pump with regulated pressure, transported through hoses partly back to the same reactor, for recirculation and keeping the inoculum as a homogeneous suspension, and partly up to the place of application, where the hose is connected to a pike placed at the end of a rod and, simulating a small syringe, it is injected into the interior of the substrate (water, sediment, sludge, etc.), diffusing through its interstices, to allow a close contact between the bacterial inoculum and the soluble particles or substances that will be digested, removed or inactivated.

It should be noted that the method is characterised for not re-suspending the sediments during the application, since this would alter the receiving medium.

The reactor is configured as a cylindrical recipient with a specific capacity, made of a non-metallic and non-translucent material, and provided with an upper lid; it also has a level meter with a lateral outlet at the bottom, and an adjustable opening and closing valve. The previously mentioned pump is connected through a hose to the bottom outlet of the reactor to extract and impel the inoculum; and there is a bifurcated hose connected to this pump which is used for recirculation and the application of the inoculum.

The hoses have the corresponding connections and stopcocks.

Telescopic rods are used to locate the pikes at the best location to inject the inoculum.

### PREFERRED EMBODIMENT OF THE INVENTION

In order to carry out a bioremediation biological treatment with anaerobic, facultative and aerobic bacteria in a riven bed with an average thickness of sediments of 1.1 m and for an extension of 2,500 m², for a dosage of 40 grams per m³, 110 kg of total load of the aforementioned biological product are needed.

The volume of inoculum to be prepared will be the result of dividing 110 kg by 12.5 g/l (which is the concentration that should be used), that is, 8,800 litres of inoculum.

These 8,800 litres of inoculum shall therefore be homogeneously introduced along the full extension (2,500 m²) and depth of the sediments.

2,000 litres of water of the medium to be treated are introduced in a recipient with capacity for 2,200 litres that will be used as a reactor. Then, the biological nutrient is added in a proportion of 2%/volume of water - that is, 40 litres of biological nutrient - and it is re-circulated for 10 minutes.

After this recirculation time, the ammonia molybdate at 10 ppm, which is 20 grams for the volume of 2,000 litres, is added.

Finally, 25 kg of the lyophilised biological product being used are added in a proportion of 12.5 grams per litre of water introduced in the reactor; after re-circulating for 30 minutes the inoculum will be ready for injection into the sediment.

During the application, recirculation shall be kept until all of the inoculum is used.

This procedure is repeated until the total calculated load is consumed, which was 110 kg of the lyophilised biological product being used.
**1/ Physicochemical analysis:**
   Moisture: 6.7 %
   Fire loss: 86.5 %
   Soluble solids: 7.57 %
   pH of a suspension of the product in water: 5.4
   Organic matter: 69.6 %
   Organic carbon: 40.4 %
   Kjeldahl nitrogen: 3.7 %
   P₂ O₅ that can be assimilated (removable as oxalate): 1.97 per thousand.
   Calcium: 11.4 mili-equivalent for 100 g
   Magnesium: 9.5 "
   Potassium: 12.1 "
   Sodium: 146.2 "
   Total iron: 1.12 %
   Manganese: 0.008 %
**2/ Viable germs:**
   Total germs: 7 x 10⁹ / gr
   Revivable aerobic germs: 3 x 10⁹ / gr
**3/ Enzymatic activity:**
   Amylolytic activity: 7.5 units/mg
   Proteolytic activity: 2,360 units/mg
   Lipolytic activity: 21.6 units/mg

It can be therefore concluded that the biological product has a marked enzymatic activity for starch, proteins and triglycerides.

## Claims

1. Biological method applicable for the bacterial bioremediation in aquatic ecosystems and urban and industrial effluents for the proper digestion of organic matter and nutrients by addition of an inoculum, **characterized in that** and wherein the amount in grams used from each bacterial culture for every 100 grams of the lyophilised product depends on each of the selected genus and is as follows: 5 grams of *Bacillus,* 3 grams of *Bacteroides,* 3 grams of *Chaetomium,* 10 grams of *Clostridium,* 3 grams of *Enterobacter,* 3 grams of *Enterococcus,* 1 gram of *Erwinia,* 3 grams of *Helicobacterium,* 3 grams of *Humicola,* 3 grams of *Klebsiella,* 1 gram of *Lactobacillus,* 6 grams of *Methanobacterium,* 5 grams of *Methanococcus,* 5 grams of *Methanosarcina,* 5 grams of *Methanospirillum,* 5 grams of *Nitrosolobus,* 5 grams of *Nitrosomonas,* 5 grams of *Nitrospira,* 5 grams of *Nitrobacter,* 3 grams of *Paracoccus,* 3 grams of Pseudomonas, 3 grams of *Ruminococcus,* 3 grams of *Sarcina,* 3 grams of *Streptomyces,* 5 grams of *Vibrio,* 1 gram of *zymomonas,* selected from the natural media, revivable in more than 99% when re-hydrating with water (inoculation), together with their specific and addressable enzymes, proteases, lipases, amylases, celullases, etc. and wherein the preparation of the inoculum is carried out according to the following stages:
- Introduction of water from the medium to be treated into the reactor recipient.
- Introduction of hydrolysed protein in a proportion between 2-4 cubic centimetres for each 100 ml of the volume of the inoculum to prepare; removal without agitation and recirculation for 10 minutes.
- Introduction of trace elements, whose composition and concentration shall include Fe 2 nM, Co 10 nM, Ni 100 nM and Mo 10 nM.
- Introduction of a lyophilised biological product of anaerobic, facultative and aerobic bacteria in a proportion of 12.5 grams/litre of inoculum to prepare; recirculation of all the mixture for at least 30 minutes,

## Patentansprüche

1. System für die bakterielle Bioremediation in aquatischen Ökosystemen und kommunalen und industriellen Abwasser zur geeigneten Faulung von organischen Stoffen und Nährstoffen, dessen Verfahren zur Vorbereitung des Inokulums durch folgende Schritte gekennzeichnet ist:
- das Einleiten des aus dem aufnehmenden Gewässer stammenden, zu behandelnden Wassers in den Reaktorbehälter;
- das Einleiten des Proteinhydrolysats in einem Anteil von 2 bis 4 Kubikzentimeter pro 100 ml des vorzubereitenden Inokulumvolumens, unter Umrührung ohne Schütteln und mit Umlauf 10 Minuten lang;
- das Einleiten der Spurenelemente, deren Zusammensetzung und Konzentration 2 nM Fe, 10 nM Co, 100 nm Ni und 10 nM aufweisen werden;
- das Einleiten des gefriergetrockneten biologischen Produkts aus aeroben und fakultativ anaeroben Bakterien in einem Anteil von 12,5 Gramm/Liter des vorzubereitenden Inokulums; mit Umlauf der gesamten Mischung mindestens 30 Minuten lang.

## Revendications

1. Système de biorestauration bactérienne dans des écosystèmes aquatiques et des rejets urbains et industriels pour la digestion adéquate de la matière organique et des nutriments, dont le procédé de préparation de l'inoculum est **caractérisé par** les étapes suivantes :
- introduire l'eau provenant du milieu récepteur à traiter dans le récipient du réacteur ;
- introduire l'hydrolysat protéique dans une proportion de 2 à 4 centimètres cubes par 100 ml de volume de l'inoculum à préparer, remuer sans agiter et recirculer pendant 10 minutes ;
- introduire les oligoéléments, dans la composition et concentration desquels seront présents Fe 2 nM, Ce 10 nM, Ni 100 nM et Mo 10 nM ;
- introduire le produit biologique lyophilisé de bactéries anaérobies facultatives et de bactéries aérobies dans une proportion de 12,5 grammes/litres d'inoculum à préparer ; recirculer l'ensemble du mélange pendant au moins 30 minutes.
